# EUROPEAN PATENT APPLICATION

(11) **EP 2 012 005 A2**
(43) Date of publication of application: **07.01.2009**
(21) Application number: 08011785.6
(22) Date of filing: 30.06.2008
(51) Int. Cl.: F03B 1/00, F03B 1/02

(54) **Hydraulic turbine**

(30) Priority: 02.07.2007 IT TO20070482
(71) Applicant: Barozzi, Pietro, 20066 Melzo (MI) (IT)
(72) Inventor: Barozzi, Pietro, 20066 Melzo (MI) (IT)
(74) Representative: Cian, Paolo

(57) **Abstract**

An impulse turbine comprises at least one runner (10; 110; 210) provided with a plurality of blades (14; 14a; 114; 214) and adapted to rotate about an axis of rotation (A) as a result of the delivery of a pressurized fluid to the blades (14; 14a; 114; 214) through fluid delivery means which include at least a nozzle (20; 120; 220) facing an active surface (22; 22a, 22b; 122; 222) of the blades. Each nozzle (20; 120; 220) includes an outflow portion (20a; 120; 220a) lying substantially in a general plane of the runner (10; 110; 210) and extending in an inner zone of the runner between the blades (14; 14a; 114; 214) and the axis of rotation (A). The outflow portion (20a; 120; 220a) of the nozzles (20; 120; 220) is directed towards the outside of the runner (10; 110; 210) along a direction parallel to and spaced from the radial direction of the runner, and each blade (14; 14a; 114; 214) of the runner (10; 110; 210) define an arched path extending transversely to the plane of the runner (10; 110; 210).

## Description

The present invention refers to hydraulic turbines, particularly of the impulse type, in which the available pressure potential energy is transformed integrally into kinetic energy in the distributor but not in the runner.

More specifically, the invention relates to a turbine having the features mentioned in the preamble of claim 1.

The most common impulse hydraulic turbines of the type mentioned above, are the Pelton turbines. These turbines have a series of advantages, among which a remarkable constructive and maintenance simplicity, a relatively high efficiency and a good reliability in operation. However, they suffer the drawback that they cannot be used with very small heights of fall, for example in the order of few meters, since their efficiency would be too much reduced in these conditions, and anyway their use is little suitable for medium and small heights of fall. However, it is well known that the most of the heights of fall suitable for being used in the production of hydroelectric power, above all by means of small systems for energy production, are just the medium, small and very small height of fall, for which the Pelton turbines are usually unadvisable. Under the circumstances, exploitation of reduced heights of fall usually requires the use of turbines at least partially of the reaction type which, such as the known turbines of the Francis, Kaplan and Cross-flow type, which are more expensive from a constructive point of view and which require a more burdensome maintenance.

The main object of the present invention is to propose a hydraulic turbine, particularly of the impulse type, having a relatively simple structure, which requires a little burdensome maintenance, and which can be used in order to exploit medium or low heights of fall with a satisfactory efficiency.

This object is reached according to the invention by a turbine having the features mentioned in claim 1.

By virtue of such an idea of solution, the turbine according to the invention turns out to be particularly simple from a constructive point of view, to full advantage of the reduction of manufacturing and maintenance costs, and of the reliability thereof in operation. Since the turbine of the invention is a full action turbine, the blades of its runner or of its runners, never work in a suction conditions, as instead happens for reaction turbines, so that they do not run the risk to undergo cavitation with a resulting erosion of the blades. Moreover, the turbine of the invention does not require movable deflector members associated with the distributor for correctly directing the flow of fluid to the blades of the runner, only the position of the nozzles associated with the distributor being able to determine the correct delivery direction of the fluid towards the blades of the runner, which contributes to simplify the turbine structure and to minimize losses of the machine which may derive from frictions in the distributor, with a resulting better efficiency which turns out to be therefore close to the theoretical maximum.

Further characteristics and advantages of the invention will be more clearly appreciated from the following detailed description, which is referred to the appended drawings, supplied as a non-limitative example only, in which:
figure 1 is a schematic perspective view of a unit comprising a runner and a series of fluid delivery nozzles associated thereto, which makes part of an hydraulic turbine according to a first embodiment of the invention,
figure 2 is a partial and enlarged view of a detail indicated by arrow II in figure 1, showing a series of blades of the runner and a portion of the fluid delivery nozzles,
figure 3 is an elevational view from arrow III of figure 1,
figure 4 is an enlarged perspective view of a single blade of the runner indicated by arrow IV in figure 2,
figure 5 is an overall perspective view of a turbine according to the first embodiment of the invention, which includes the unit of figure 1 and a distributor unit provided with a device for adjusting the flow rate of the fluid for the nozzles,
figure 6 is a view similar to figure 5, showing a plurality of positions of the adjusting device, by means of which the flow rate of the fluid for the nozzles may be changed,
figure 7 is a schematic perspective view similar to figures 5 and 6, showing a modification of the nozzles configuration with respect to those of figures 5 and 6,
figure 8 is a schematic perspective view of the turbine of figure 5, which is incorporated in a case provided at the bottom with a suction-diffusion duct for discharging the fluid admitted to the turbine,
figure 9 is a view similar to figure 2, showing a modification of a blade array of the runner and of a series of respective delivery nozzles,
figure 10 is a view similar to figure 4, of a single blade of the runner indicated by arrow X in figure 9,
figure 11 is a schematic perspective view of a second embodiment of a turbine according to the invention, which includes a pair of runners to each of which a series of delivery nozzles are associated,
figure 12 is an elevational view from arrow XII of figure 11,
figure 13 is a view similar to figure 11, from which one of the runners has been removed in order to show a portion of the distributor unit provided with the delivery nozzles,
figure 14 is a perspective exploded views of some elements of figure 11, showing one runner of the turbine and a portion of the relevant distributor unit,
figure 15 is a schematic perspective view of a third embodiment of a turbine according to the invention, which includes one runner and a series of delivery nozzles,
figure 16 is an enlarged perspective view of a pair of adjacent blades of the turbine of figure 15,
figure 17 is an elevational diametrally sectioned view of the runner of the turbine of figure 15,
figure 18 is an enlarged perspective view of a single blade of the runner, indicated by arrow XVIII in figure 17, and
figure 19 is a back elevational view of the blade of figure 18, from arrow XIX.

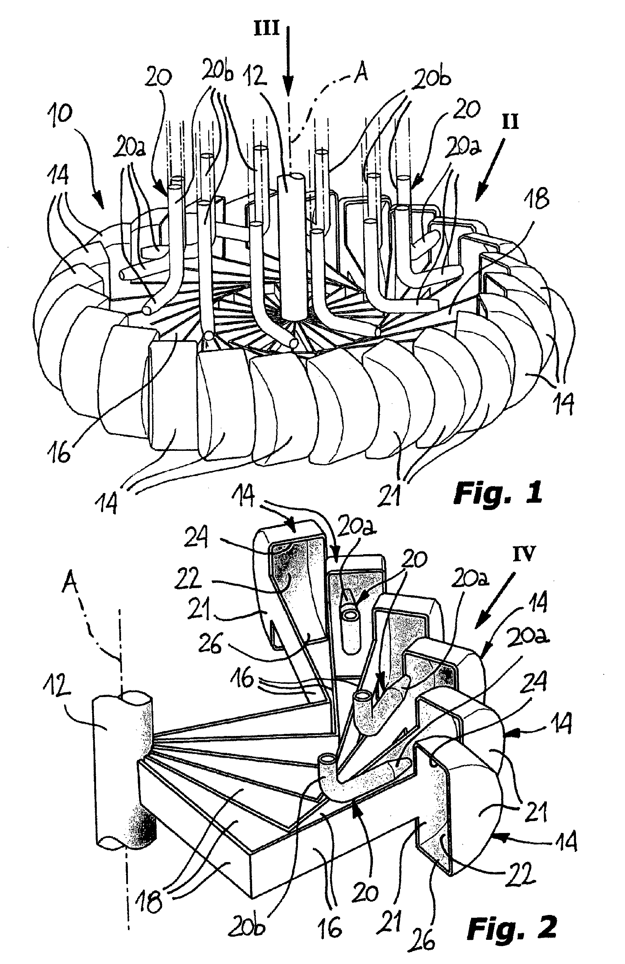

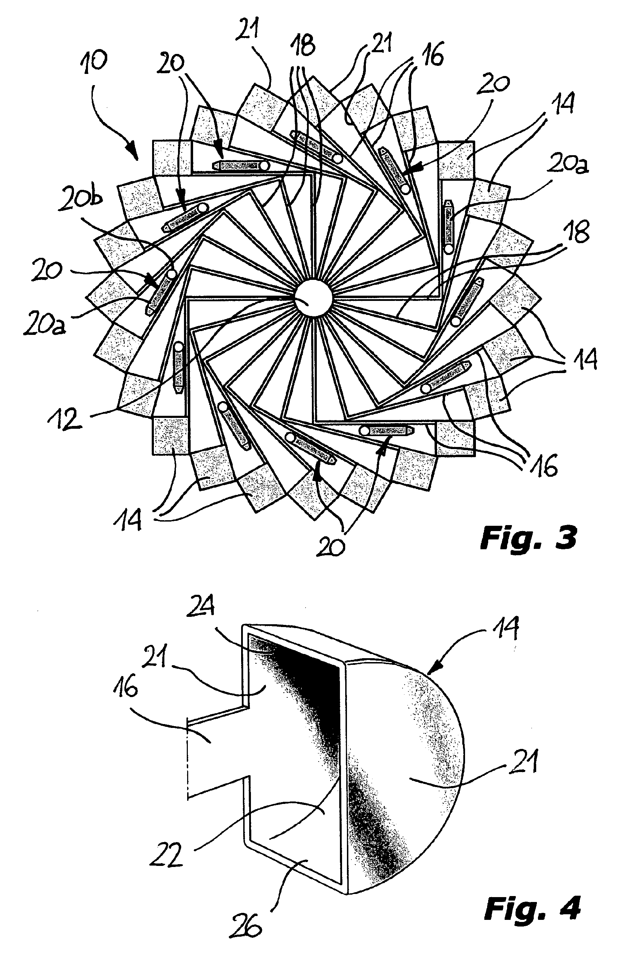

With initial reference to figures 1 to 8, which show a first embodiment of a hydraulic turbine according to the invention, a runner of the turbine is indicated 10 in its whole. The runner 10 is rotatably mounted on a shaft 12 having an axis A, preferably arranged vertically. In these figures, the elements of the structure which are adapted to rotatably support the shaft 12 and the runner 10 are not shown in detail since they are within the reach of the skilled person.

The runner 10 comprises a crown of blades 14, each of which is connected to the shaft 12 through a primary arm 16 and a secondary arm 18, the latter being perpendicular to the respective primary arm 16. In practice, the secondary arms 18 as a whole constitute a kind of circular hub connected to the shaft 12, whose radius corresponds to the length of the arms 18.

A plurality of diffuser nozzles 20 is associated to the runner 10. The number of nozzles 20 may be equal to the number of the blades 14, or lower than it. Preferably, one nozzle 20 is provided at each two blades 14, in such a manner that the number of the nozzles 20 is half the number of the blades 14.

Each nozzle 20 comprises an outflow portion 20a adapted to deliver a pressurized fluid, typically water, which faces the blades 14, and a transfer portion 20b arranged upstream from the portion 20a. The outflow portion 20a of each nozzle 20 extends in an inner zone of the runner 10 which is contained between the blades 14 thereof and the axis of rotation A, lies in a general plane of the runner 10, and is directed outside of the runner 10. Each outflow portion 20a extends parallel to the primary arms 16 and is therefore directed according to a direction parallel to the radial direction of the runner 10, but spaced with respect to it.

Each blade 14 comprises a working active surface 22 defining an arched path for the fluid, and extending between a leading portion 24 thereof, arranged substantially at the same level of the general plane of the runner, and a trailing portion 26, spaced from the general plane of the runner. Since the outflow portion 20a of each nozzle 20 is directed to the leading portion 24 of the blades 14, the fluid delivered by each nozzle 20, after having covered the active surface 22 of a blade 14 between its leading portion 24 and its trailing portion 26, is discharged through the latter transversely to the runner 10, towards the bottom.

The active surface 22 of each blade 14 is preferably flat and arched with a semicircular or semi-elliptic shape of a constant section, and it is delimited sideways by a pair of flat walls 21 parallel and substantially equal to each other, one of which is connected with the primary arm 16 of the relevant blade 14. The two sidewalls 21 of each blade 14 are each one fixed to a wall 21 of an adjacent blade 14.

By varying the length of the secondary arms 18, the length of the arms 16 remaining the same, the distance between the median plane of each blade 14 and the axis A changes. Since the outflow portion 20a of the nozzles 20 is always directed perpendicular to the active surface of the blades 14, in particular with respect to their leading portion 24, a change in the length of the arms 18 results in the change of the distance between the axis of the outflow portions 20a of the nozzles 20 and the axis A, and therefore of the distance between the axis A and the direction of the fluid jet delivered from the nozzles 20 to the blades 14. Therefore, changing the length of the arms 18, for a given length of the arms 16, results in the change of the design number of revolution of the runner 10.

On the other hand, changing the length of the arms 16, the length of the arms 18 remaining the same, causes the change of the diameter of the runner 10 and therefore, for a same dimension of the blades 14, a change of the number of the blades 14 and of the number of the nozzles 20, and therefore a change of the flow rate fed to the runner 10.

In practice, by modifying the design length of the arms 16 and 18 of a runner 10, it is possible to fit the runner to any operational condition required in view of the available water flow rate (in which case one will act on the length of the arms 16) or of the speed of rotation required for the runner 10 in terms of number of revolutions, as a result of the type of alternator associated with the runner and with the electrical network connected to the turbine (in which case one will act on the length of the arms 18). The possibility to adjust in a simple manner the design flow rate and the number of revolutions for the runner 10 by changing the length of the arms 16 and 18, makes the turbine of the invention particularly flexible and easy adaptable to a great variety of use conditions.

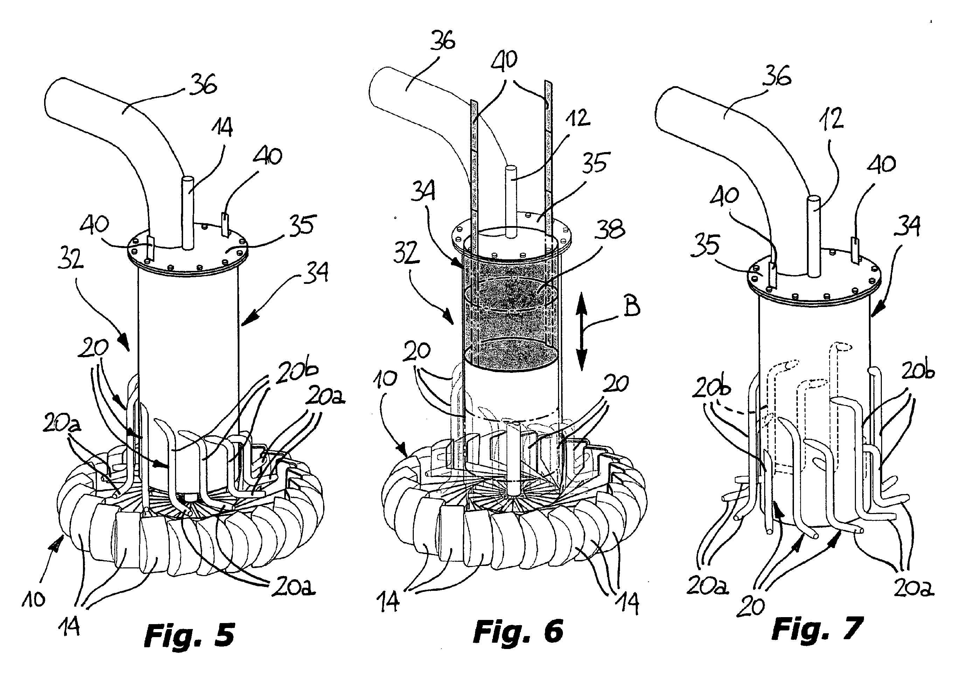

In figures 5 and 6, the runner 10 is associated to a cylindrical distributor unit 34, coaxial with the shaft 12, which includes an adjusting device for adjusting the flow rate of the fluid delivered through the nozzles 20 towards the runner 10. The turbine unit including the runner 10, the nozzles 20 and the distributor 34, as well as the members associated thereto, is indicated 32 in its whole.

The distributor 34 is sealingly closed at its opposite ends by a pair of plates, the upper of which is indicated 35 in the figures. A duct 36 for feeding the fluid to the turbine 32 extends from the plate 35, such a duct being typically connected with a watercourse from which the fluid needed for the operation of the turbine 32 is taken.

The side surface of the distributor 34 has a plurality of through holes (not visible in the figures) at each of which a respective nozzle 20 is fixed. The nozzles 20 are made by respective S shaped ducts having a rectilinear intermediate portion, which constitutes the transfer portion 20b thereof, whose length is variable. In particular, the lengths of the transfer portions 20b of the nozzles 20 are arranged in figures 5 and 6 according to a decreasing order in the counter-clockwise direction, starting from the nozzle 20 having the longer portion 20b.

A cylindrical valve member 38 (shown in a darker color in figure 6 and for which three different positions are identified in dashed lines), which is provided with a pair of fixed push rods 40 projecting outside the slab 35, is slidably mounted inside the distributor 34. By operating on the rods 40 it is possible to change the axial position of the valve member 38 with respect to the distributor 34, as indicated by arrow B of figure 6, in order to occlude, according to the position thereof, partially the holes of the side surface of the distributor 34, with the aim of preventing or shutting the feeding of fluid to some of the feeding ducts of the nozzles 20, in order to adjust the flow rate fed to the runner 10. In this manner, the flow rate admitted to the runner 10 can be modified in a simple and progressive way in order to get the adjustment of the delivered power. The control of the position of the valve member 38 may be interlocked with an automatic control system, such as of the electronic or electromechanical type, adapted to act particularly in the event of an unexpected cutoff in the use load, for example caused by a failure in service of the electrical network connected to the turbine 32, in order to avoid resulting damages to the runner owing to the application of high stresses in such circumstances.

Figure 7 shows an alternative arrangement of the nozzles 20 of the distributor 34, with respect to that shown in figures 5 and 6. In particular, the nozzles 20 are here arranged with respect to the runner 10, according to diametrically opposite pairs, whose length of the portions 20b decreases alternatively in the circumferential direction. In practice, the two nozzles 20 having the longer portions 20b, which are different to each other, are arranged at diametrally opposite locations of the distributor 34 and, advancing for example in the counter-clockwise direction of the distributor 34, the pair of nozzles 20 having the shorter portions 20b arranged at diametrically opposite locations follow, then a pair of diametrically opposite nozzles 20 whose portions 20b are the longest except for the nozzles 20 mentioned first, and so on. In this manner, the adjustment of the axial position of the valve member 38 in one of its directions of sliding, for example in the direction from above to below, allows to occlude gradually the nozzles 20 which have a decreasing length and are arranged at diametrally opposite location of the runner 10, so that the load applied to the blades 14 by the fluid delivered from the nozzles 20 turns out to be substantially balanced in all the adjustment conditions of the flow rate.

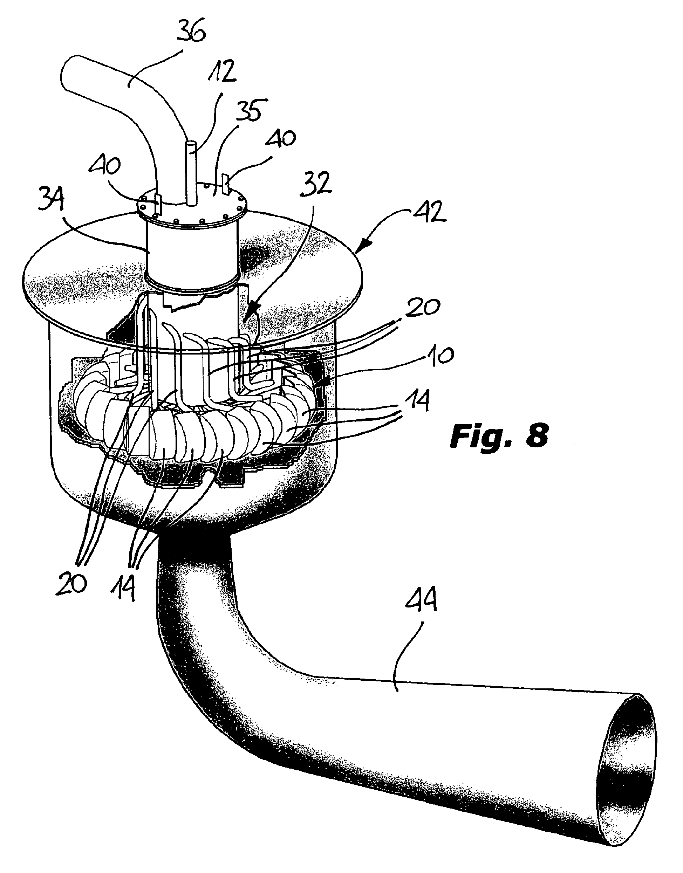

Since the turbine of the invention is particularly suitable for being used with medium, low and very low heights of fall, in the most general case, it cannot be arranged at the same level of the tail race, which would allow to take advantage of the whole available height of fall. The impossibility, in many cases, to arrange the turbine at the tail race level may cause high losses in the normal operation of the turbine and involve also the cutoff in the operation in the event of floods of the watercourse from which the turbine takes the fluid, because of the raising of the level of the tail race. In order to recover these losses and to allow the correct operation in the event of floods, it is convenient to place the turbine 32 into a sealed case (indicated 42 in figure 8) from the lower portion of which, to the outlet, a diverging water pipe 44, a so-called "aspirator-diffuser pipe", extends, which is intended to be immerged in the watercourse in which the turbine 32 releases the used fluid. In the operation of the turbine 32 placed into the sealed case 42, by virtue of the presence of the diverging water pipe 44, a suction is determined inside of the case 42, which allows to recover almost integrally the height of fall that otherwise could not be exploited.

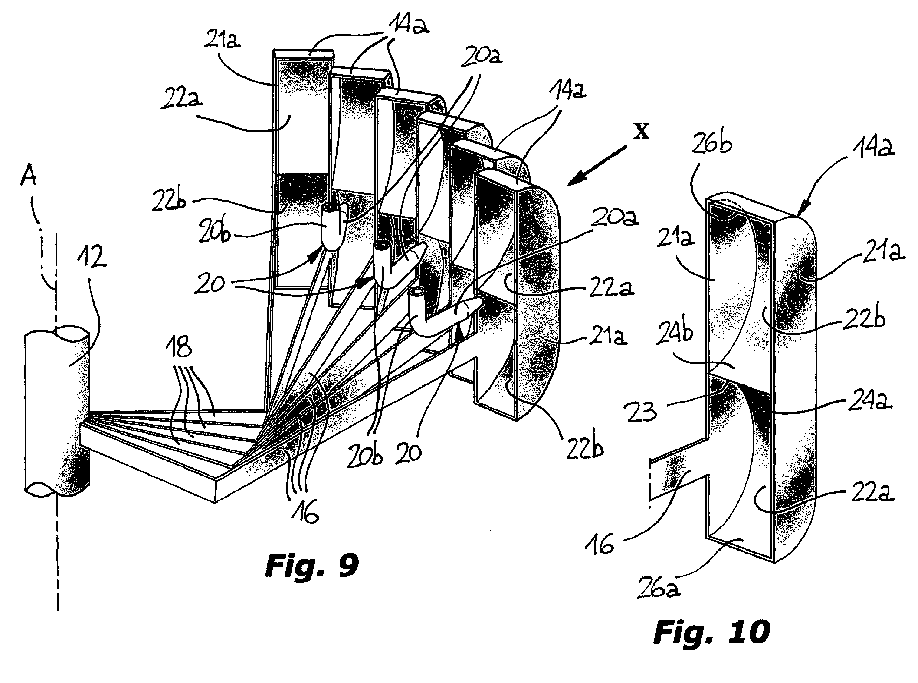

Figures 9 and 10 show a modification of the shape of the turbine blades, here indicated 14a, particularly suitable for a runner 10 arranged with its axis A horizontal. Each blade 14a comprises a pair of active surfaces 22a and 22b aligned and opposite to each other, having a constant cross-section, which define respective arched paths for the fluid, and which extend between respective leading portions 24a and 24b defined by a common diverging portion 23 in front of which the outflow portions 20a of the nozzles 20 are arranged.

Each blade 14a, at opposite sides with respect to the diverging portion 23, has respective trailing portions 26a and 26b equally spaced with respect to the general plane of the runner, and therefore with respect to the plane on which the outflow portions 20a lie. Also in this case, the active surfaces 22a and 22b of the blades 14a are preferably flat and arched, with a semicircular or semielliptic shape. The pair of active surfaces 22a and 22b of a same blade 14a is delimited sideways by two flat, parallel and substantially equal side walls 21a, one of which is connected with the relevant primary arm 16 of the blade 14a, the walls 21a of each blade 14a being each one fixed to a wall 21a of an adjacent blade 14a.

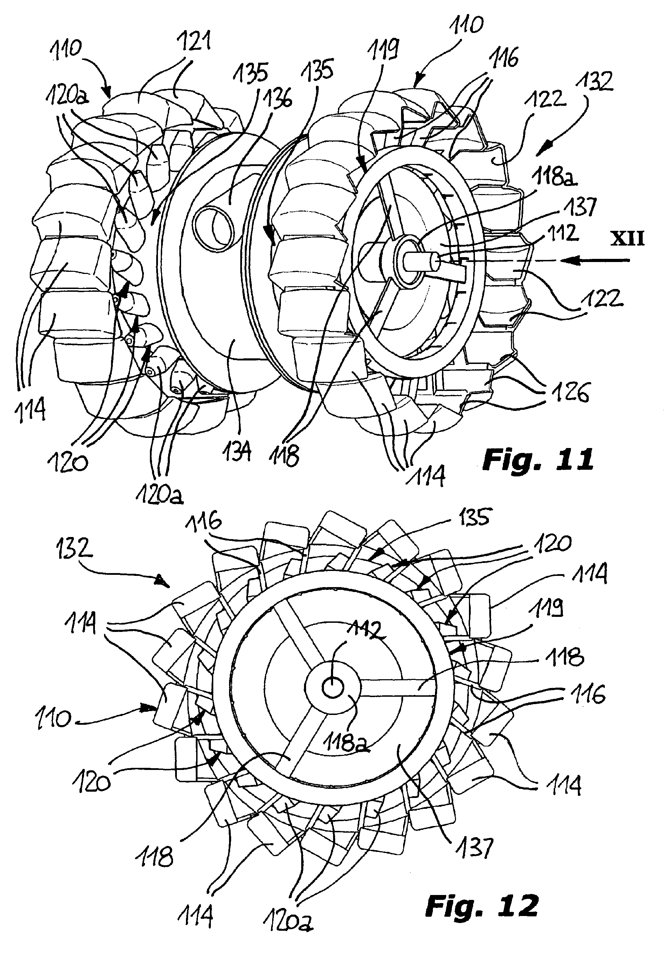

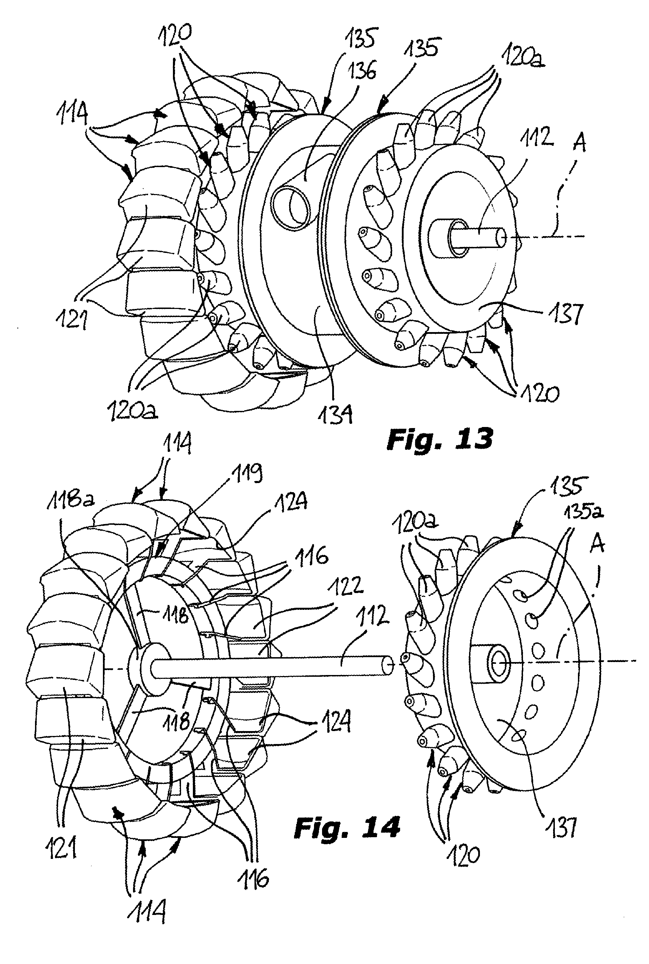

Figures 11 to 14 show a second embodiment of the turbine according to the invention, here indicated 132. In these figures, the same numeral references of the previous embodiment have been used in order to indicate parts equal or similar thereto, with their numbers increased by 100.

The turbine 132 includes a pair of equal runners 110, both fastened on a same shaft 112 having an axis A, particularly intended to be arranged horizontal, the runners being arranged at opposite sides of a substantially cylindrical distributor unit 134.

Each runner 110 has a crown of blades 114 each of which defines an arched active surface 122, preferably flat and having a semicircular or semielliptic shape, which extends between a leading portion 124 and a trailing portion 126, and is delimited sideways by walls 121. The leading portions 124 of the blades 114 are arranged substantially at the same level of a general plane of the respective runner 110 on which the outflow portions 120a of a plurality of nozzles 120 lie, while the trailing portions 126 of the blades 114 are arranged on a plane parallel and axially spaced with respect to the general plane of the same runner 110.

The nozzles 120 associated to a runner 110 have a rectilinear shape and extend from an annular body 135 coaxial with the axis A, secured beside the distributor unit 134 and sealingly closed at the relevant runner 110 by means of a head 137. Each annular body 135 has a series of through holes 135a, through which the fluid contained in the distributor unit 134 is fed to the nozzles 120 in order to be delivered to the blades 114. Conveniently, each annular body 135 is associated with a cylindrical valve member (not shown in the figures) which may be moved axially as a result of a command received from the outside of the turbine 132, in a manner conceptually similar to that described in connection with the previous embodiment, in order to adjust the flow rate admitted to the nozzles 120 and sent to the blades 114.

One of the walls 121 which delimit sideways each blade 114 of the runners 110, is connected to a respective primary arm 116 having an end opposite to the blade 114 which is engaged in a respective seat of an annular support memmber 119. The annular member 119 has a plurality of spokes 118 for connecting it with a hub 118a coaxial with the shaft 112.

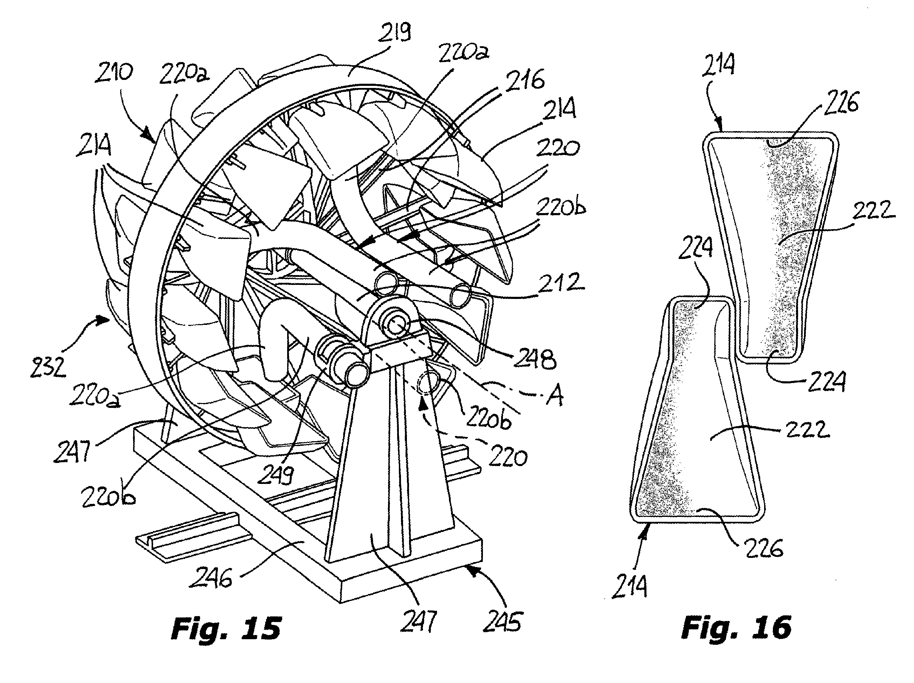

Figures 15 to 19 show a third embodiment of a turbine according to the invention, which is indicated 232 in its whole. In these figures, the same numeral references of the first embodiment have been used to indicate parts equal or similar thereto, with their numbers increased by 200.

The turbine 232 comprises a runner 210 rotatably mounted on a shaft 212 having an axis A, particularly intended to be arranged horizontal. Rolling bearings 248 (only one of which can be seen in figure 15) are mounted at the ends of the shaft 212, which are associated with a support structure 245 including a base 246 and a pair of vertical uprights 247. A plurality of support members 249 (only one of which can be seen in figure 15), adapted to support a respective nozzle 220, is fixed to each of the uprights 247. In particular, each support member 249 includes an annular portion clamped on the transfer portion 220b of a respective nozzle 220, so as to hold the trailing portion 220a of the respective nozzle 220, which is directed towards the outside of the runner and along a direction parallel to and spaced from the radial direction, inside the runner 210 in a zone between the blades 214 and the axis of rotation A, so that the nozzles 220 face the leading portions 224 of the blades 214.

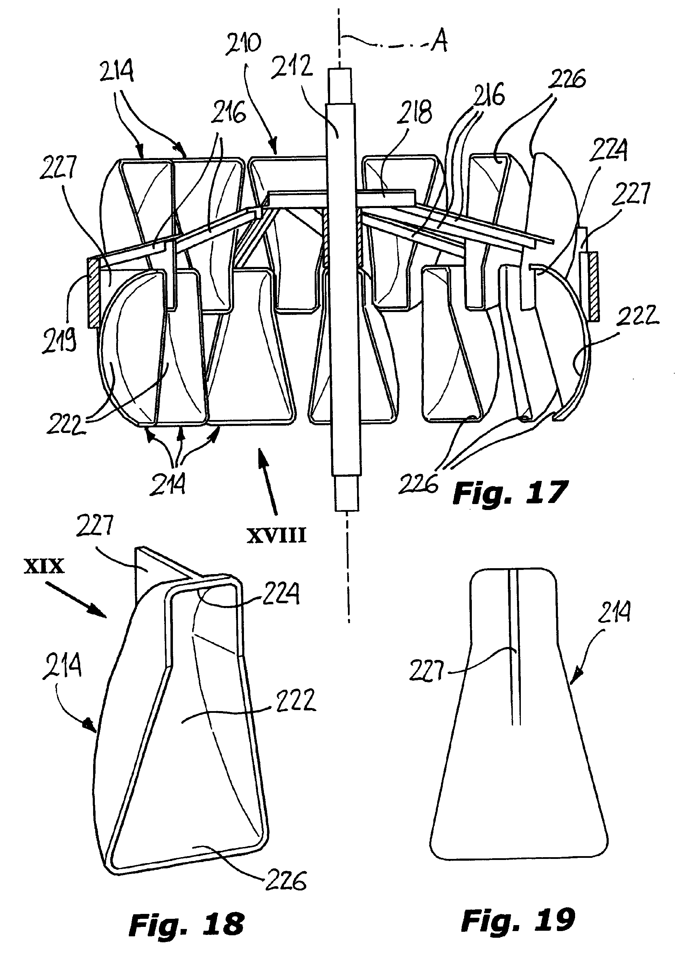

The blades 214 of the runner 210 are secured to an annular support member 219 connected to a circular hub 218, coaxial with the shaft 212, by a plurality of spokes 216 (figure 17). In particular, the outflow portions 220a of the nozzles 220 and the leading portions 224 of the blades 214 are substantially arranged at the same level of a general plane of the runner 210 which corresponds to a median plane of the annular member 219.

Each blade 214 defines a substantially spoon shaped concave active surface 222 extending between the relevant leading portion 224 and the relevant trailing portion 226, the leading portion 224 being generally narrow, and the blade progressively widening towards the trailing portion 226. A rib 227, intended to be inserted in a corresponding seat of the inner surface of the annular support member 219, for allowing to secure the blades on the annular member 219, exends from the back of the blades 214 at the side opposite to their active surface 222.

The blades 214 are arranged alternatively opposed, in such a manner that the trailing portion 226 of one blade 214 is arranged at the side opposite to the trailing portions 226 of two adjacent blades 214. In practice, the trailing portions 226 of the blades 214 of the runner 210 lie on two parallel planes equally spaced from the general plane of the runner 210.

As for the previous embodiments, the nozzles 220 can be advantageously associated with a cylindrical distributor unit (not shown), similar to that described in connecton with the first embodiment and conveniently provided with adjustement means for adjusting the flow rate of the fluid delivered, which include for example a cylindrical valve member movable with respect to the distributor unit.

## Claims

1. Impulse turbine comprising at least one runner (10; 110; 210) provided with a plurality of blades (14; 14a; 114; 214) and adapted to rotate about an axis of rotation (A) as a result of the delivery of a pressurised fluid to the blades (14; 14a; 114; 214) through fluid delivery means which include at least a nozzle (20; 120; 220) facing an active surface (22; 22a, 22b; 122; 222) of the blades of the runner, said nozzle including an outflow portion (20a; 120; 220a) lying substantially on a general plane of the runner (10; 110; 210),
**characterized in that** the outflow portion (20a; 120; 220a) of each nozzle (20; 120; 220) extends in an inner zone of the runner between the blades (14; 14a; 114; 214) and the axis of rotation (A), and is directed towards the outside of the runner (10; 110; 210) along a direction parallel to and spaced from the radial direction of the runner, each blade (14; 14a; 114; 214) of the runner (10; 110; 210) defining at least an arched path for the fluid which extends in a direction substantially transverse to the plane of the runner, so that discharge of the fluid from each blade (14; 14a; 114; 214) takes place transversely to the runner (10; 110; 210).

2. Turbine according to claim 1, **characterized in that** the blades (14; 14a; 114; 214) have an active surface (22; 22a, 22b; 122; 222) extending between a leading portion (24; 24a, 24b; 124; 224) for the fluid, which is arranged subtantially at the same level of the general plane of the runner (10; 110; 210), and a trailing portion (26; 26a, 26b; 126; 226) for the fluid, which is axially spaced from the general plane of the runner (10; 110; 210).

3. Turbine according to claim 2, **characterized in that** the active surface (22; 22a, 22b; 122; 222) of the blades (14; 14a; 114; 214) is a flat arched surface having a semicircular or semielliptic shape.

4. Turbine according to claim 4, **characterized in that** the blades (14; 14a; 114) include flat walls delimiting sideways the respective active surfaces (22; 22a, 22b; 122) and extending between the active surfaces (22; 22a, 22b; 122) of two adjacent blades (14; 14a; 114).

5. Turbine according to any one of claims 2 to 4, **characterized in that** each blade (14a) comprises a pair of active surfaces (22a, 22b) whose leading portions (24a, 24b) are defined by a common diverging portion (23) subtantially arranged at the same level of the general plane of the runner, and whose trailing portions (26a, 26b) are axially spaced at opposite sides with respect to the general plane of the runner.

6. Turbine according to any one of claims 1 to 5, **characterized in that** the blades (14; 14a; 114; 214) of each runner (10; 110; 210) are connected to the respective shaft (12; 112; 212) through at least an arm (16, 18; 116, 118; 216, 218).

7. Turbine according to claim 6, **characterized in that** the blades (14; 14a) are connected to the respective shaft (12) by a primary arm (16) and by a secondary arm (18) perpendicular to each other, the primary arm (16) being parallel to the radial direction of the runner (10) and the secondary arm (18) being radial with respect to the runner (10).

8. Turbine according to claim 6, **characterized in that** the blades (114) are connected with an annular member (119) connected with a respective shaft (112) through a plurality of radial spokes (118), by respective primary arms (116).

9. Turbine according to claim 6, **characterized in that** the blades (214) are secured to an annular support member (219) which is connected with a circular hub (218) coaxial with relative shaft (212), by means of primary arms (216).

10. Turbine according to claim 9, **characterized in that** the runner (10) includes two arrays of blades whose leading portions (224) are arranged at the same level of the general plane of the runner, the trailing portion (226) of the blades (224) of a first array being axially spaced with respect to the general plane of the runner at a first side, and the trailing portion (226) of the blades (224) of the second array being axially spaced with respect to the general plane of the runner at a second side, on the side opposite to said first side, the blades (224) of the first array and of the second array being arranged alternatively along the circumference of the runner (210).

11. Turbine according to claim 10, **characterized in that** the active surface (222) of the blades (214) is a substantially spoon shaped concave surface having a narrow section at the leading portion (224), which widens towards its trailing portion (226).

12. Turbine according to claim 10 or 11, **characterized in that** each blade (214) comprises a back formation (227) for connecting it with said annular support member (219).

13. Turbine according to any one of claims 1 to 12, **characterized in that** it comprises a distributor unit (34; 134, 135) from which said nozzles (20; 120; 220) extends.

14. Turbine according to claim 13, **characterized in that** it comprises adjusting means (38, 40) for adjusting the flow rate of the fluid delivered to the runner (10) by the nozzles (20), said means being associated to the distributor unit (34; 134, 135).

15. Turbine according to claim 14, **characterized in that** the distributor unit includes a cylindrical body (32) coaxial with said axis of rotation (A), said flow rate adjusting means including a cylindrical valve member (38) for each runner, which is axially movable within the cylindrical body (32) with the aim of occluding at least partially an inlet section of said nozzles (20).

16. Turbine according to claim 15, **characterized in that** said nozzles (20) are substantially S shaped, and have different lengths.

17. Turbine according to claim 16, **characterized in that** said nozzles (20) are arranged with respect to the runner (10) in such a manner that their lengths decrease in a circumferential direction.

18. Turbine according to claim 17, **characterized in that** said nozzles (20) are arranged with respect to the runner (10) according to diametrically opposite pairs whose length decreases alternatively in the circumferential direction.

19. Turbine according to any one of claims 1 to 18, **characterized in that** the runner (10; 110; 210) and the nozzles (20; 120; 220) are enclosed in a sealed case (42), so that a uniform pressure is kept in the whole turbine (32; 132; 232), and **in that** said case (42) has an outlet diverging water pipe (44).

20. Turbine according to claim 19, **characterized in that** said flow rate adjusting means (38, 40) can be controlled from the outside of said sealed case (42).
